# EUROPÄISCHE PATENTANMELDUNG

(11) **EP 3 453 531 A1**
(43) Veröffentlichungstag der Anmeldung: **13.03.2019**
(21) Anmeldenummer: 17189954.5
(22) Anmeldetag: 07.09.2017
(51) Int. Cl.: B32B 15/08

(54) **HYBRIDBAUTEIL**

(71) Anmelder: Nolax AG, 6203 Sempach Station (CH)
(72) Erfinder: Vogler, Christian, 91278 Pottenstein (DE); Frey, Thomas, 6204 Sempach (CH); Koch, David, 3007 Bern (CH); Traber, Bruno, 3110 Münsingen (CH)
(74) Vertreter: Hepp Wenger Ryffel AG

(57) **Zusammenfassung**

Die Erfindung betrifft ein Hybridbauteil. Das Hybridbauteil umfasst ein Metallelement und ein zweites Element, vorzugsweise ein Kunststoffelement. Zwischen dem Metallelement und dem zweiten Element ist mindestens eine Zwischenschicht angeordnet. Die mindestens eine Zwischenschicht weist maximal 2 Gew.-% Harz auf. Die Erfindung betrifft auch ein Verfahren zum Herstellen eines Hybridbauteils, die Verwendung sowie die Verwendung einer thermoplastischen Folie.

## Beschreibung

Die Erfindung betrifft ein Hybridbauteil, ein Verfahren zum Herstellen eines Hybridbauteils, Verwendung eines Hybridbauteils sowie die Verwendung einer thermoplastischen Folie gemäss den Oberbegriffen der unabhängigen Ansprüche.

Heissgasschweissen ist eine etablierte Technik zum Verbinden von Kunststoffteilen. DE 40 17 145 beschreibt das Verbinden von Thermoplasten mit Metallen mittels einer Schweisshilfe. Die Schweisshilfe besteht dabei aus Ethylen-Vinylacetat-Copolymer, einem linearen thermoplastischen Polyurethan sowie mindestens 10 Gew.-% eines klebrigmachenden Harzes. Diese Zusammensetzung des Klebstoffes ist für die Anwendung im Automobilbereich jedoch ungeeignet. Die Schmelzpunkte der Grundpolymere und der hohe Harzanteil führen dazu, dass die Wärmestandfestigkeit nicht erreicht wird. Harze werden im aufgeschmolzenen Zustand sehr dünnflüssig, so dass bei dreidimensionalen Strukturen der Klebstoff zerfliesst und nicht mehr an den ursprünglich aufgetragenen Stellen zur Verfügung steht. Derart hergestellte dreidimensionale Hybridbauteile würde es an der notwendigen Festigkeit fehlen.

Es ist daher eine Aufgabe der Erfindung, die Nachteile des Stands der Technik zu überwinden.

Insbesondere ist es eine Aufgabe der Erfindung, eine Hybridbauteil bereitzustellen, dass eine besonders gute Festigkeit und Wärmestandfestigkeit aufweist. Es ist eine weitere Aufgabe der Erfindung ein Verfahren für die Herstellung eines solchen Hybridbauteils bereitzustellen sowie dessen Verwendung.

Diese Aufgaben werden durch die in den unabhängigen Patentansprüchen definierten Vorrichtungen und Verfahren gelöst. Weitere Ausführungsformen ergeben sich aus den abhängigen Patentansprüchen.

Die Erfindung betrifft ein Hybridbauteil. Das Hybridbauteil umfasst ein Metallelement und ein zweites Element. Das zweite Element ist vorzugsweise ein Kunststoffelement. Zwischen dem Metallelement und dem zweiten Element ist mindestens eine Zwischenschicht angeordnet. Die mindestens eine Zwischenschicht weist maximal 2 Gew.-% Harz auf. Es ist auch denkbar, dass die Formulierung der mindestens einen Zwischenschicht harzfrei ist.

Die mindestens eine Zwischenschicht ermöglicht eine feste Verbindung zwischen dem Metallelement und dem zweiten Element. Aufgrund des niedrigen Harzgehaltes in der Zwischenschicht weist das Hybridbauteil eine hohe Wärmebestandfestigkeit auf, so dass das Hybridbauteil auch an Orten eingesetzt werden kann, die üblicherweise hohe Betriebstemperaturen aufweisen.

Die mindestens eine Zwischenschicht ist vorzugsweise thermoplastisch. Die Zwischenschicht kann auch duroplastisch sein. Insbesondere entsteht die duroplastische Zwischenschicht durch Energieeintrag in das latent reaktive thermoplastische Material (z.B. UV, ebeam, Wärme).

Die mindestens eine Zwischenschicht kann mindestens 50% eines thermoplastischen Kunststoffs umfassen. Vorzugsweise ist der Kunststoff ausgewählt aus der Gruppe: Polypropylen, Polyethylen, modifizierte Polyolefin, Ionomer, Copolyamid, Copolyester, thermoplastisches Polyurethan, Styrol-Copolymer und Mischungen davon. Modifizierte Polyolefine können beispielsweise Ethylenacrylsäure-Copolymer(EAA), Ethylenvinylacetat (EVA), Ethylenmethylacrylat (EMA) und Ethylenbutylacrylat (EBA) sein. Vorzugsweise sind Polypropylen und Polyethylen mit funktionellen Gruppen funktionalisiert. Bevorzugte funktionelle Gruppen sind Anhydride und Epoxide, insbesondere Maleinsäureanhydrid oder Glycidylmethacrylat. Die funktionalisierten Polymere können entweder als Pfropfpolymere oder Copolymere vorliegen.

Eine solche Zwischenschicht hat den Vorteil, dass diese sehr gut schweissbar ist ohne jedoch dünnflüssig zu werden. Durch die Wahl des Kunststoffs ist die Schweisstemperatur einstellbar. Zudem kann der Verwendungszweck durch die Wahl des Kunststoffes angepasst werden.

Vorzugsweise sind zwischen dem Metallelement und dem zweiten Element zwei oder mehr Zwischenschichten angeordnet. Die Schichten weisen vorzugsweise variierende Materialzusammensetzungen auf, die zusammen aber mindestens 50 Gew.-% eines thermoplastischen Kunststoffes umfassen.

Mehrere Zwischenschichten haben den Vorteil, dass die jeweils zu dem entsprechenden Element weisende Oberfläche der Zwischenschicht derart angepasst werden kann, dass eine optimale Haftung zwischen beispielsweise einer ersten äusseren Zwischenschicht und dem Metallelement respektive einer zweiten äusseren Zwischenschicht und dem zweiten Element erzielt werden kann. Eine dritte Zwischenschicht, die beispielsweise zwischen zwei äusseren Zwischenschichten angeordnet ist kann derart gestaltet sein, dass diese eine optimale Haftung zwischen den äusseren Schichten gewährleistet. Auf diese Art kann ein besonders fester Verbund erzielt werden. Unter einer "äusseren Zwischenschicht" ist damit die Zwischenschicht gemeint, die in einer Mehrschichtenanordnung zu dem Metallelement respektive dem zweiten Element weist.

Die mindestens eine Zwischenschicht kann als Klebstoff vorliegen. Die Zwischenschicht kann auch in Form einer Folie oder Raupe vorliegen. Liegt die mindestens eine Zwischenschicht als Folie vor, so kann diese beispielsweise vorher in einem Extrusionsverfahren aus einer Schicht oder mehreren Schichten hergestellt worden sein.

Die mindestens eine Zwischenschicht kann weitere Bestandteile umfassen. Beispielsweise können der Zwischenschicht 0-50 Gew.-% mineralische oder organische Füllstoffe zugesetzt sein. Es ist ebenfalls denkbar, dass die Zwischenschicht 0-50 Gew.-% Elastomere umfasst. Ebenfalls möglich ist der Einsatz von 0-10 Gew.-% Additiven, wie beispielsweise Stabilisatoren, Antiblockmittel, Verarbeitungshilfsmittel und/oder Farben.

Die mindestens eine Zwischenschicht lässt sich so entsprechend der geplanten Anwendung optimal anpassen.

Die mindestens eine Zwischenschicht weist vorteilhafterweise eine komplexe, nicht nur in einer Ebene verlaufende, Geometrie auf. Die Zwischenschicht weist vorzugsweise überall im Wesentlichen die gleiche Dicke auf. Die Zwischenschicht kann 1 bis 1000 µm dick sein. Sind die Zwischenschichten als Folien ausgebildet, werden bevorzugt Dicken von 10 bis 500 µm verwendet. Besonders bevorzugt sind Dicken von 20 bis 200 µm.

Die Zwischenschicht eignet sich besonders zur Herstellung von dreidimensionalen Bauteilen. Aufgrund der Zusammensetzung kann die Zwischenschicht auch an Bauteile komplexer Geometrien angepasst werden. Ein Zerfliessen bei hoher Temperaturbelastung erfolgt nicht. Hybridbauteile mit einer solchen Zwischenschicht zeichnen sich dabei durch eine besondere Verbundfestigkeit aus unabhängig von der Komplexität der Geometrie des Hybridbauteils.

Vorteilhafterweise ist ein Material des zweiten Elements ausgewählt aus der Gruppe: Kunststoff, insbesondere Thermoplast oder Duroplast; Metall; Metalllegierung; Textil oder Faserverbundwerkstoff. Bevorzugt sind verstärkte und gefüllte Kunststoffe. Die Füllstoffe können aus Mineralien oder biologischen Quellen gewonnen sein oder künstlich hergestellt sein. Beispiele für Füllstoffe sind Kreide, Talkum oder Glasfaser. Bevorzugt sind Kreide, Glimmer, Glasfaser und Kohlenstofffasern. Die Faserverbundwerkstoffe sind beispielsweise synthetische Textilien oder Filamenten sowie Kunststoffe.

Die Wahl des zweiten Elements bietet eine optimale Anpassung an die Verwendung. Das Material kann hitzestabil, robust, und/oder resistent gegenüber einer Vielzahl an Chemikalien gestaltet werden und zeichnet sich durch Langlebigkeit aus.

Das Metallelement ist vorzugsweise ausgewählt aus der Gruppe: Aluminium; Aluminiumlegierung; Stahl, insbesondere Edelstahl oder verzinkter Stahl; Kupfer oder Kupferlegierungen; Titan oder Titanlegierungen; Magnesium oder Magnesiumlegierungen; Zinn oder Zinnlegierungen; Blei oder Bleilegierungen. Weitere Beispiele sind Messing und Bronze.

Die Wahl des Metallelements ermöglicht eine breite Anwendungsmöglichkeit. Die plastische Verformbarkeit ermöglicht eine Vielzahl an komplexen Geometrien.

Ein weiterer Aspekt der Erfindung betrifft ein Verfahren zur Herstellung eines Hybridbauteils mit mindestens einem Metallelement, vorzugsweise eines Hybridbauteils wie vorhergehend beschrieben. Das Verfahren umfasst die Schritte:
a) Auftragen mindestens einer, insbesondere thermoplastisch verarbeitbaren, Zwischenschicht auf eine Oberfläche des Metallelements oder auf einer Oberfläche eines zweiten Elements,
b) Aufheizen der Oberfläche des Metallelements und/oder der Oberfläche des zweiten Elements,
c) Fügen des Metallelements und des zweiten Elements an den Oberflächen.

Die Schritte a) und b) erfolgen unter einem Heissgasstrom. Die Zwischenschicht weist maximal 2 Gew.-% Harz auf. Die Zwischenschicht kann weitere Zusatzstoffe, wie bereits vorhergehend beschrieben, aufweisen. Ebenso ist es denkbar, dass die Zwischenschicht zu einem Duroplast verarbeitet werden kann.

Besonders bevorzugt erfolgt das Aufheizen der Oberfläche des zweiten Elements, insbesondere, wenn das zweite Element aus einem Kunststoff gefertigt ist. Dazu wird die insbesondere thermoplastisch verarbeitbare Zwischenschicht beispielsweise in Form einer Folie lose an das Metallelement angeordnet. Das zweite Element wird beispielsweise für wenige Sekunden mit einem Heissgasstrom mit einer Temperatur von 550 °C erhitzt, so dass die erreichte Oberflächentemperatur des Kunststoffes zwischen 250 °C und 300 °C liegt.

Ganz besonders bevorzugt ist das Verfahren, wenn zusätzlich zum Kunststoffelement auch das Metallelement erhitzt oder zumindest erwärmt wird.

Das Aufheizen verkürzt die Prozesszeiten. Durch die Erwärmung des zweiten Elements ist es beispielsweise möglich, den Energieeintrag in das Metallelement zu verringern. Die Temperaturen an den Oberflächen der Elemente sind für die Herstellung des Hybridbauteils dennoch ausreichend.

Es ist alternativ denkbar, nur die Oberfläche des Metalls zu erhitzen. Das Aufheizen des Metallelements erfolgt üblicherweise in einem Zeitraum zwischen 1 min und 5 min, besonders bevorzugt 2 min. Dies ist insbesondere dann vorteilhaft, wenn das Metall zusätzlich mit einem Kunststoffverarbeitungsverfahren bearbeitet wird. Beispielsweise kann mittels Spritzguss ein weiterer Kunststoff an das Metall angefügt werden.

Das Metallelement kann auch vorgeheizt werden. Das Vorheizen kann beispielsweise in einem Ofen oder mittels Strahlers, insbesondere eines Infrarotstrahlers, erfolgen. Auch eine induktive Erwärmung ist denkbar. Alternativ kann das Metallelement auch mit einem beheizbaren Werkzeug in Kontakt sein.

Das Verfahren zeichnet sich durch die Herstellung einer besonders guten stoffschlüssigen Verbindung zwischen unterschiedlichen Materialien aus. Die Prozesszeiten für die Herstellung eines Hybridbauteils werden gesenkt. Dies führt zu einem kostengünstigeren Verfahren. Das Vorheizen des Metallelements hat den Vorteil, dass die nötigen Prozesstemperaturen schneller erreicht werden und Prozesszeiten dadurch verkürzt werden.

Mittels des erfindungsgemässen Verfahrens können Hybridbauteile mit einer Zugscherfestigkeit von über 12 MPa hergestellt werden.

Vorzugsweise ist die mindestens eine Zwischenschicht als Folie, insbesondere eine thermoplastische Folie, ausgebildet und weist bevorzugt zwei Schichten und ganz besonders bevorzugt drei Schichten auf. Aber auch mehrere Schichten sind denkbar. Eine solche Folie kann beispielsweise im Vorfeld mittels eines Extrusionsverfahrens hergestellt werden. Die Zwischenschicht kann aber auch als Raupe aufgetragen werden oder als Sprühkleber.

Vorteilhafterweise wird der Heissgasstrom mittels Inertgas, vorzugsweise Stickstoff, erzeugt. Inertgase sind kommerziell erhältlich, insbesondere Stickstoff und Argon. Die Speisung erfolgt über Druckflaschen oder entsprechend dafür vorgesehene Gasleitungen. Das Gas wird typischerweise auf Temperaturen von 300 bis 700 °C erhitzt. Bevorzugt ist der Bereich zwischen 400 und 600 °C und ganz besonders bevorzugt sind 500 bis 550 °C.

Die Verwendung von Inertgas hat den Vorteil, dass eine Schädigung der Zwischenschicht bei Temperaturen oberhalb von 200 °C aufgrund sauerstoffhaltiger Luft vermieden wird.

Es ist aber auch denkbar, dass der Heissgasstrom mit Luft erzeugt wird. Dies kann insbesondere dann erfolgen, wenn die Zwischenschicht durch beispielsweise Zusätze gegen thermooxidativen Abbau zusätzlich hitzestabilisiert ist oder alternativ über das Metallelement ein schneller Wärmeabfluss erfolgt.

Vorzugsweise weist die mindestens eine Zwischenschicht nach dem Fügen eine komplexe, nicht nur in einer Ebene verlaufende, Geometrie auf und kann wie vorhergehend beschrieben gestaltet sein.

Das Aufheizen der Oberfläche des Metallelements und das Aufheizen der Oberfläche des zweiten Elements können bei unterschiedlichen Temperaturen und unterschiedlichen Erwärmungszeiten erfolgen.

Handelt es sich bei dem zweiten Element um einen Kunststoff, so wird der Kunststoff vorzugsweise nur oberflächlich angeschmolzen. Dies ist innerhalb weniger Sekunden möglich. Dadurch wird der Kunststoff nur minimal thermisch belastet und nicht geschädigt. Der Kunststoff bewahrt dadurch langlebige Eigenschaften. Um die Oberfläche des Kunststoffs anzuschmelzen wird die Oberfläche typischerweise auf Temperaturen erhitzt, die zwischen 20 °C und 50°C oberhalb der Schmelztemperatur des Kunststoffs liegen.
Die Erwärmungszeiten des Metallelements können je nach Grösse und verwendeten Metall variieren. Die Temperatur auf dem Metall sollte mindestens 20°C über dem Schmelzpunkt der Zwischenschicht liegen um eine optimale Haftung zu erzielen.

Durch die separate Aufheizmöglichkeit können die Prozessparameter optimiert und so der Herstellungsprozess beschleunigt werden.

Ein weiterer Aspekt der Erfindung betrifft die Verwendung einer thermoplastischen Folie mit maximal 2 % Harz zum Verschweissen von zwei unterschiedlichen Elementen, wobei zumindest ein Element ein Metallelement ist. Die Folie kann eine Schicht, bevorzugt zwei Schichten und ganz besonders bevorzugt drei Schichten aufweisen. Auch mehr als drei Schichten sind denkbar. Die Folie kann weiter wie vorhergehend beschrieben ausgestaltet sein.

Eine solche Folie zeichnet sich dadurch aus, dass sie auch bei höherer Wärmebelastung nicht flüssig wird und damit nicht zerfliesst. Es wird gewährleistet, dass die Folie im Wesentlichen überall die gleiche Dicke aufweist. Dadurch eignet sich die thermoplastische Folie auch zum Auftragen und Fügen auf komplexen dreidimensionalen Strukturen. Es können sehr robuste Hybridbauteile erzielt werden.

Ein weiterer Aspekt der Erfindung betrifft die Verwendung eines Hybridbauteils wie vorhergehend beschrieben als strukturelle und semistrukturelle Bauteile oder im Automobilbau. Unter "strukturelle Bauteile" sind dabei lasttragende, d.h. besonders harte und feste, Bauteile gemeint. Unter "semi-strukturelle Bauteile" sind Bauteile gemeint, die weniger hart sind aber dennoch Lasten tragen können.
Die Hybridbauteile können beispielsweise aufgrund der hohen Festigkeit und Wärmestandfestigkeit im Motorraum eingesetzt werden.

Anhand von Figuren, welche lediglich Ausführungsbeispiele darstellen, wird die Erfindung im Folgenden näher erläutert. Es zeigen:
- Figur 1:: Einen Aufbau eines erfindungsgemässen Hybridbauteils,
- Figur 2:: Eine erste Variante eines erfindungsgemässen Verfahrens zum Herstellen eines Hybridbauteils,
- Figur 3:: Eine zweite Variante eines erfindungsgemässen Verfahrens zum Herstellen eines Hybridbauteils,
- Figur 4:: Eine dritte Variante eines erfindungsgemässen Verfahrens zum Herstellen eines Hybridbauteils.
- Figur 5:: Ausführungen der mindestens einen Zwischenschicht als Folie in einem Hybridbauteil gemäss Figur 2.

Gleiche Bezugszeichen kennzeichnen gleiche Teile der Erfindung.

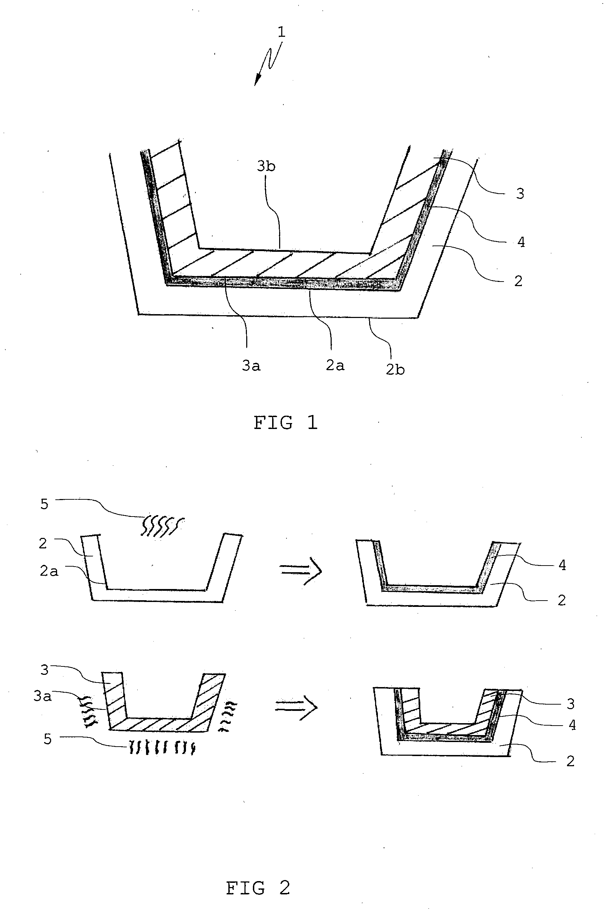

Figur 1 zeigt einen Aufbau eines erfindungsgemässen Hybridbauteils 1. Das Hybridbauteil 1 umfasst ein Metallelement 2 und ein Kunststoffelement 3 aus Polypropylen. Zwischen dem Metallelement 2 und dem Kunststoffelement 3 ist eine Zwischenschicht 4 angeordnet. Die Zwischenschicht weist eine Dicke von 100 µm auf. Das Metallelement 2 weist eine zur Zwischenschicht 4 weisende Oberfläche 2a und eine ihr abgewandte Oberfläche 2b auf. Das Kunststoffelement 3 weist ebenfalls eine zur Zwischenschicht 4 weisende Oberfläche 3a und eine ihr abgewandte Oberfläche 3b auf. Das Metallelement 2 und das Kunststoffelement 3 sind über die Oberflächen 2a und 3b mit der Zwischenschicht 4 verbunden.

Figur 2 zeigt eine erste Variante eines erfindungsgemässen Verfahrens zum Herstellen eines Hybridbauteils. Dazu wird ein Metallelement 2 bereitgestellt und die Oberfläche 2a des Metallelements mittels eines Heissgasstroms 5 erhitzt. Im Anschluss wird eine thermoplastische Zwischenschicht 4 in Form einer Folie an das Metallelement gefügt. Eine Oberfläche 3a eines Kunststoffelements 3 wird dann ebenfalls mittels eines Heissgastroms 5 erhitzt und anschliessend über die Zwischenschicht 4 an das Metallelement 2 gefügt. Bei dem Kunststoffelement handelt es sich um Polypropylen. Das Polypropylen wurde kurzzeitig mit einer Temperatur von 550 °C erhitzt, so dass die Temperatur der Oberfläche 3a einen Wert zwischen 250 °C und 330 °C aufwies.

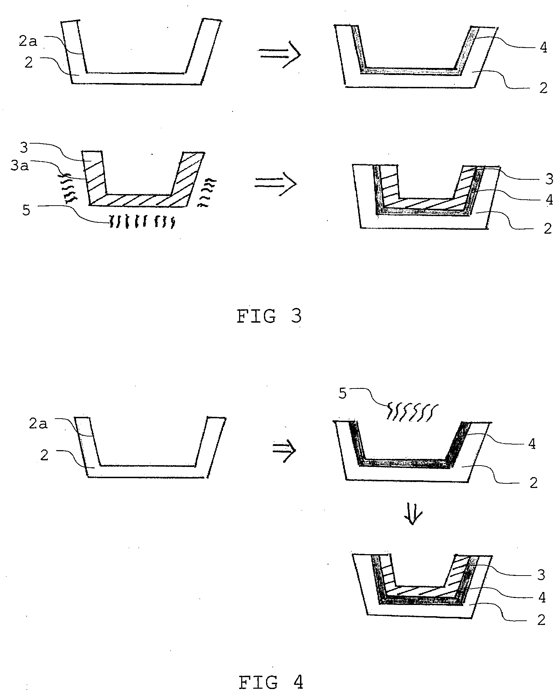

In Figur 3 ist eine zweite Variante eines erfindungsgemässen Herstellungsverfahrens aufgezeigt. Die zweite Variante unterscheidet sich von der ersten Variante im Wesentlichen darin, dass kein Aufheizen der Metalloberfläche 2a erfolgt. Die Zwischenschicht 4 wird als Folie auf das Metallelement 2 aufgebracht. Das Kunststoffelement 3 wird mittels eines Heissgasstroms 5 erhitzt, so dass die Temperatur der Oberfläche 3a des Kunststoffelements 3 deutlich über der Schmelztemperatur der Zwischenschicht 4 liegt. Die Oberfläche 3a des Kunststoffs 3 wird dabei angeschmolzen. Durch das Fügen des Kunststoffelements 3 mit der aufgeheizten Oberfläche 3a an die Zwischenschicht 4 wird diese geschmolzen. Nach Abkühlen und Aushärten der Zwischenschicht 4 erfolgt so eine feste und wärmestandfeste Verbindung zwischen dem Kunststoffelement 3 und dem Metallelement 2.

Figur 4 zeigt eine weitere Variante eines erfindungsgemässen Verfahrens zum Herstellen eines Hybridbauteils. Dazu wird zunächst eine Metallelement 2 bereitgestellt. An die Oberfläche 2a des Metallelements 2 wird eine thermoplastische Zwischenschicht 4 lose angeordnet. Mittels eines Heissgastroms 5 wird die Zwischenschicht geschmolzen. Im Anschluss wird an die geschmolzene Zwischenschicht 4 das Kunststoffelement 3 angefügt. Das Kunststoffelement 3 wurde dazu wie in Bezug auf Figur 2 beschrieben erhitzt. Nach Abkühlen und Härtung der Zwischenschicht 4 resultiert eine feste und wärmestandfeste Verbindung zwischen dem Metallelement 2 und dem Kunststoffelement 3.

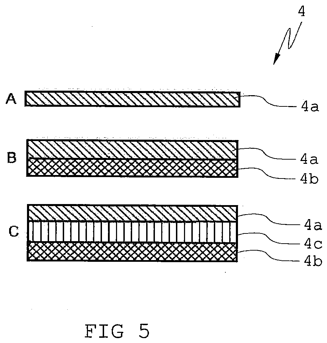

Figur 5 zeigt mögliche Varianten der mindestens einen Zwischenschicht 4 in Form einer Folie wie in Figur 2 beschrieben. In Variante A ist die Folie 4 nur aus einer Schicht 4a aufgebaut. Eine Folie, wie in Variante A dargestellt, ist beispielsweise bei einem Verbund aus Stahl und Polypropylen denkbar. In diesem Fall kann die Schicht 4a beispielsweise aus MAH-g-PP sein. In Variante B umfasst die Folie 4 mindestens zwei Zwischenschichten 4a und 4b. Die Schicht 4a kann beispielsweise derart gestaltet sein, dass die Schicht 4a eine besonders gute Verbindung mit einer Metalloberfläche (2a, Figur 1) eingeht. Die Metalloberfläche kann beispielsweise Stahl sein. Beispielsweise eignet sich als Schicht 4a ebenfalls MAH-g-PP. Die Schicht 4b kann derart gestaltet sein, dass die Schicht 4b eine besonders gute Verbindung mit einer Kunststoffoberfläche (3a, Figur 1) eingeht. Eine solche Kunststoffoberfläche kann beispielsweise aus Polyamid bestehen. In diesem Fall und in Kombination mit der genannten Schciht 4a sind beispielsweise PA oder CoPA als Schicht 4b denkbar. In Variante C ist zwischen der ersten äusseren Schicht 4a und der zweiten äusseren Schicht 4b eine Zwischenschicht 4c angeordnet. Die Zwischenschicht 4c kann derart gestaltet sein, dass die Schicht 4c einen besonders festen Verbund zu der Schicht 4a und zu der Schicht 4b bildet. Die Schichten 4a und 4b können wie vorhergehend beschrieben gestaltet sein.

## Patentansprüche

1. Hybridbauteil (1), umfassend ein Metallelement (2) und ein zweites Element (3), vorzugsweise ein Kunststoffelement, wobei zwischen dem Metallelement (2) und dem zweiten Element mindestens eine Zwischenschicht (4) angeordnet ist, **dadurch gekennzeichnet, dass** die mindestens eine Zwischenschicht (4) maximal 2 Gew.-% Harz aufweist.

2. Hybridbauteil (1) gemäss Anspruch 1, wobei die mindestens eine Zwischenschicht (4) thermoplastisch ist.

3. Hybridbauteil (1) gemäss Anspruch 2, wobei die mindestens eine Zwischenschicht (4) mindestens 50% eines thermoplastischen Kunststoffs umfasst, vorzugsweise ausgewählt aus der Gruppe: Polypropylen, Polyethylen, modifiziertes Polyolefin, Ionomer, Copolyamid, Copolyester, thermoplastisches Polyurethan, Styrol-Copolymer und Mischungen davon.

4. Hybridbauteil (1) gemäss einem der vorherigen Ansprüche, wobei die mindestens eine Zwischenschicht (4) eine komplexe, nicht nur in einer Ebene verlaufende, Geometrie aufweist und überall im Wesentlichen die gleiche Dicke aufweist.

5. Hybridbauteil (1) gemäss einem der vorherigen Ansprüche , wobei ein Material des zweiten Elements (3) ausgewählt ist aus der Gruppe: Kunststoff, insbesondere Thermoplastoder Duroplast; Metall; Metalllegierung; Textil oder Faserverbundwerkstoff.

6. Hybridbauteil (1) gemäss einem der vorherigen Ansprüche, wobei das Metallelement (2) ausgewählt ist aus der Gruppe: Aluminium; Aluminiumlegierung; Stahl, insbesondere Edelstahl oder verzinkter Stahl; Kupfer oder Kupferlegierungen; Titan oder Titanlegierungen; Magnesium oder Magnesiumlegierungen; Zinn oder Zinnlegierungen; Blei oder Bleilegierungen.

7. Verfahren zur Herstellung eines Hybridbauteils (1) mit mindestens einem Metallelement (2), vorzugsweise eines Hybridbauteils (1) nach einem der Ansprüche 1 bis 6, umfassend die Schritte
a) Auftragen mindestens einer, insbesondere thermoplastisch verarbeitbaren, Zwischenschicht (4) auf eine Oberfläche (2a) des Metallelements (2) oder einer Oberfläche (3a) eines zweiten Elements (3),
b) Aufheizen der Oberfläche (2a) des Metallelements (2) und/oder der Oberfläche (3a) des zweiten Elements (3),
c) Fügen des Metallelements (2) und des zweiten Elements (3) an den Oberflächen (2a, 3a),
wobei die Schritte a) und b) unter einem Heissgasstrom (5) erfolgen, **dadurch gekennzeichnet, dass** die Zwischenschicht (4) maximal 2 % Gew.-% Harz aufweist.

8. Verfahren nach Anspruch 7, wobei das Metallelement (2) vorgeheizt wird.

9. Verfahren gemäss Anspruch 7 oder 8, wobei die mindestens eine Zwischenschicht (4) als Folie ausgebildet ist und bevorzugt zwei Schichten (4a, 4b) und ganz besonders bevorzugt drei Schichten (4a, 4b, 4c) aufweist.

10. Verfahren nach einem der Ansprüche 7 bis 9, wobei der Heissgasstrom (5) mittels Inertgas, vorzugsweise Stickstoff, erzeugt wird.

11. Verfahren nach einem der Ansprüche 7 bis 10, wobei die Zwischenschicht (4) nach dem Fügen eine komplexe, nicht nur in einer Ebene verlaufende, Geometrie aufweist und überall im Wesentlichen die gleiche Dicke aufweist.

12. Verfahren nach einem der Ansprüche 7 bis 11, wobei das Aufheizen der Oberfläche (2a) des Metallelements (2) und das Aufheizen der Oberfläche (3a) des zweiten Elements (3) bei unterschiedlichen Temperaturen und unterschiedlichen Erwärmungszeiten erfolgen.

13. Verwendung einer thermoplastischen Folie (4) mit maximal 2 % Harz zum Verschweissen von zwei unterschiedlichen Elementen (2, 3), wobei zumindest ein Element ein Metallelement (2) ist.

14. Verwendung gemäss Anspruch 13, wobei die Folie (4) mindestens eine Schicht (4a), bevorzugt zwei Schichten (4a, 4b) und ganz besonders bevorzugt drei Schichten (4a, 4b, 4c) aufweist.

15. Verwendung eines Hybridbauteils (1) nach einem der Ansprüche 1 bis 7 im Automobilbau.
